# EUROPÄISCHE PATENTSCHRIFT

(11) **EP 1 837 968 B1**
(45) Veröffentlichungstag und Bekanntmachung des Hinweises auf die Patenterteilung: **05.12.2012**
(21) Anmeldenummer: 07004862.4
(22) Anmeldetag: 09.03.2007
(51) Int. Cl.: H02B 1/30

(54) **Kopplungssystem für Zähler- und/oder Verteilerschränke**
Insulation frame for counter and/or distribution boxes
Cadre isolant pour armoire de compteur et/ou de distribution

(30) Priorität: 24.03.2006 DE 102006013603
(43) Veröffentlichungstag der Anmeldung: 26.09.2007
(73) Patentinhaber: Hager Electro GmbH & Co. KG, 66440 Blieskastel (DE)
(72) Erfinder: Amendola, Ettore, 66131 Saarbrücken (DE); Noll, Jürgen, 66440 Blieskastel (DE); Vannesson, Damien, 57520 Grosbliederstroff (FR); Loew, Thomas, 66386 St. Ingbert (DE)
(74) Vertreter: Bernhardt, Reinhold

(56) Entgegenhaltungen:
- EP-A- 1 463 169
- DE-B- 1 168 524
- GB-A- 2 233 505

## Beschreibung

Die Erfindung betrifft ein System zur Kopplung zweier, einen Korpus aus Blech aufweisender Zähler- oder/und Verteilerschränke, mit einem Isolierrahmen, welche in zueinander ausgerichtete Seitenwandöffnungen der Schränke, die an den betreffenden Seitenwänden aneinander gekoppelt sind, einsetzbar ist, um die Ränder der Seitenwandöffnungen gegen einen durch die Seitenwandöffnungen verlegbaren Leiter elektrisch zu isolieren.

Bekanntermaßen werden durch die Seitenwandöffnungen aneinander gekoppelter, aus Blech gefertigter Verteilerschränke hindurch Leitungen, insbesondere Sammelschienen, geführt. Der elektrisch unisolierte Rand der Öffnungen in den Blechseitenwänden bedarf daher einer Abschirmung durch einen solchen durch Benutzung bekannten Isolierrahmen.

Die DE 1 168 524 beschreibt einen rohrförmigen, aus Isolierstoff gefertigten Einsatzkörper, der zur Verbindung von zwei aus Guss oder Isolierstoff bestehenden Kästen einer gekapselten Verteileranlage durch in den beiden zu verbindenden Kästen angebrachte Löcher steckbar ist. Der Einsatzkörper ist zu seiner Befestigung auf einer Seite mit einem an einem Kasten anliegenden Flansch und auf der anderen Seite mit Rillen versehen, in die zur Befestigung des Einsatzkörpers an dem anderen Kasten ein mit den Rillen zusammenwirkender Schieber eingesetzt wird, Zur Durchführungen von Leitungen ist der Einsatzkörper mit einer Durchgangsbohrung versehen.

Aus der EP 1 463 169 A2 geht ein blockartiges Verbindungsstück zur Verbindung zweier Schränke hervor, das zur Einführung in eine Wandöffnung der Schränke vorgesehen und mit Rastnasen versehen ist, die in entsprechende Rastlöcher an den Wandöffnungen einrasten.

Der Erfindung liegt die Aufgabe zugrunde, ein neues Kopplungssystem der eingangs erwähnten Art zu schaffen, dessen Isolierrahmen über den genannten Isolationszweck hinaus nutzbar ist.

Das diese Aufgabe lösende Kopplungssystem nach der Erfindung ist dadurch gekennzeichnet, dass der Isolierrahmen Einrichtungen zur Aneinanderkopplung der Schränke aufweist, die einen nach außen vorstehenden, zur Anordnung zwischen den Seitenwänden vorgesehenen Ansatz mit wenigstens einer Durchführungsöffnung für ein die Seitenwände durchsetzendes Bolzenverbindungselement oder mit wenigstens einem, einstückig an dem Ansatz angeformten solchen Verbindungselement umfassen.

Vorteilhaft dient der erfindungsgemäße Isolierrahmen über den Isolierzweck hinaus auch zur mechanischen Verbindung der Zähler- oder/und Verteilerschränke.

In einer bevorzugten Ausführungsform der Erfindung füllt der Ansatz, ggf. zusammen mit einem am Isolierrahmen umlaufenden Flansch, einen Hohlraum aus, welcher zwischen den Seitenwänden der gekoppelten Schränke durch eine jeweils an die Öffnungen in den Seitenwänden angrenzende Wandeinsenkung gebildet ist. Die Wandeinsenkungen sind erforderlich, um bei einzeln aufgehängten Schränken notwendige Abdeckungen der Seitenwandöffnungen bündig in der Seitenwand versenken zu können.

Eine den Isolierrahmen und das daran befestigte Verbindungselement umfassende Baueinheit können vorgefertigt sein. Vorteilhaft sind unverlierbar am Isolierrahmen befestigte Verbindungselemente bei Bedarf verfügbar.

Der Ansatz kann vom übrigen Isolierrahmen an einer Sollbruchstelle trennbar sein. Diese Sollbruchstelle kommt dann zum Einsatz, wenn zwar Schränke miteinander zu verbinden sind, jedoch keine Leitungen von Schrank zu Schrank verlegt werden sollen. In diesem Fall wird von der obengenannten Abdeckung nur ein Teil entfernt, welcher Verbindungsöffnungen in der Seitenwand abdeckt und in den Abmessungen dem Ansatz entspricht. Zur Verbindung der Schränke werden dann allein der abgebrochene Ansatz und die Verbindungselemente verwendet.

Bei den Verbindungselementen handelt es sich vorzugsweise um Gewindebolzen mit einem von dem Gewindebolzen radial vorstehenden Mittelstück.

An dem Ansatz können ein solches Mittelstück aufnehmende Sitze gebildet sein, in denen das Mittelstück vorzugsweise verklemmbar ist.

Es wäre auch möglich, Verbindungselemente in den Isolierrahmen beim Spritzgießen einzubetten.

Vorzugsweise umfasst der Sitz einen das Mittelstück umgebenden Rahmen, von dem noch innen Nasen vorstehen. Diese Nasen ermöglichen einer Verklemmung des Mittelstücks in dem Sitz mit einer definierten Klemmkraft.

In weiterer Ausgestaltung der Erfindung kann eine Durchführungsöffnung für das Verbindungselement in einer Bodenwand des Sitzes gebildet sein.

Auch in der Durchführungsöffnung können Nasen radial nach innen vorstehen, die der Verklemmung der Verbindungselemente mit dem Ansatz dienen.

Die Erfindung wird nachfolgend anhand eines Ausführungsbeispiels und der beiliegenden, sich auf dieses Ausführungsbeispiel beziehenden Zeichnungen weiter erläutert. Es zeigen:

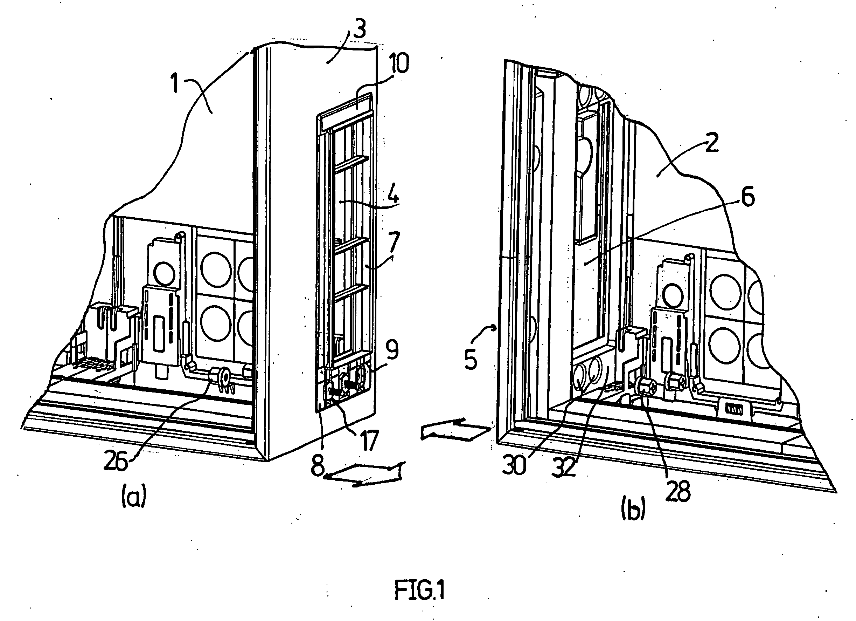

- Fig. 1: perspektivische Teilansichten aneinander koppelbare Verteilerschränke, wobei einer der Schränke mit einem Isolierrahmen nach der Erfindung versehen ist,
- Fig. 2: der an dem Verteilerschrank von Fig. 1 angebrachte Isolierrahmen in einer Seitenansicht,
- Fig. 3: der Isolierrahmen von Fig. 2 in einer zu der Seitenansicht von Fig. 2 um 180° gedrehten Seitenansicht,
- Fig. 4: eine Teilansicht des Isollerrahmens von Fig. 2 und 3 mit daran angebrachten Verbindungselementen,
- Fig. 5: eine geschnittene Teilansicht des in Fig. 4 gezeigten Isolierrahmens, und
- Fig. 6: die beiden Schränke von Fig. 1 und 2 in miteinander verbundenem Zustand in einer geschnittenen Teilansicht.

Verteilerschränke 1 und 2 weisen jeweils einen Korpus aus Blech auf. In einer Seitenwand 3 des Verteilerschranks 1 ist eine Öffnung 4 gebildet. Eine Seitenwand 5 des Verteilerschranks 2 weist eine entsprechende Öffnung 6 auf.

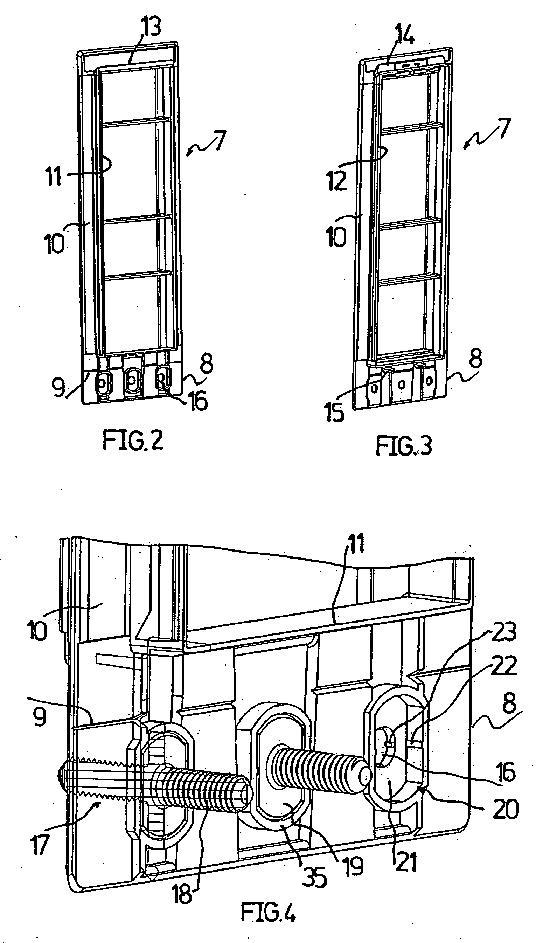

In die Öffnung 4 ist ein in den Fig. 2 bis 5 gesondert dargestellter Isolierrahmen aus Kunststoff eingesetzt.

Auf der Außenseite von einem der vier Rahmenschenkel des Isolierrahmens 7 erstreckt sich nach unten ein Ansatz 8, welcher sich an einer an einer entlang diesem Rahmenschenkel verlaufenden Sollbruchstelle 9 von dem übrigen Isolierrahmen trennen lässt.

Die Sollbruchstelle 9 grenzt an einen umlaufenden Flansch 10 des Isolierrahmens 7 an, welcher bei einer Verbindung der Schränke 1 und 2 zusammen mit dem Ansatz 8 zwischen den Seitenwänden 3 und 5 zur Anordnung kommt. Angrenzend an die Öffnung 4 bzw. 6 weist die Seitenwand 3 bzw. 5 eine umlaufende Einsenkung 24 auf. Der umlaufende Flansch 10 und der Ansatz 8 füllen einen diese Einsenkung zwischen den Schränken 1 und 2 gebildeten Hohlraum aus. Von dem Flansch 10 stehen in entgegengesetzten Richtungen zum Eingriff in die Öffnung 4 bzw. 6 vorgesehene Rahmenansätze 11 und 12 vor. Am oberen Ende der Rahmenansätze 11 und 12 ist unter Bildung einer Mulde jeweils ein Randsteg 13 bzw. 14 vorgesehen. Vom unteren Ende des Rahmenansatzes 12 stehen zwei den Rand der Öffnung 4 hintergreifende Rastnasen 15 vor.

Wie die Fig. 2 bis 5 ferner zeigen, sind in dem Ansatz 8 drei Öffnungen 16 für die Durchführung eines Verbindungselements 17 gebildet.

Die Verbindungselemente 17 weisen einen Gewindebolzen 18 mit einem vom Bolzen radial vorstehenden, scheibenförmigen Mittelstück 19 auf. Zur Aufnahme des ovalen, auf gegenüberliegenden Seiten abgeplatteten Mittelstücks 19 sind an dem Ansatz 8 entsprechend geformte Sitze 20 gebildet, deren Boden 21 jeweils eine der Durchführungsöffnungen 16 aufweist. Von einem den Sitz bildenden Rahmen 35 stehen nach innen Nasen 22 vor, welche die Mittelstücke 19 der Verbindungselemente 17 unter Erzeugung einer definierten Klemmkraft in den Sitzen 20 halten. Durch die an die Form der Mittelstücke 19 angepassten Sitze sind die Verbindungselemente 17 drehfest an dem Ansatz 16 gehalten. Der Verklemmung der Verbindungselemente 17 mit dem Ansatz 8 dienen ferner in den Öffnungen 16 radial nach innen vorstehende Nasen 23.

Der in den Fig. 2 bis 5 beschriebene Isolierrahmen 7 wird als Zubehör des Verteilerschanks 1 einschließlich der Verbindungselemente 17 mitgeliefert. Dabei kann der Isolierrahmen 7 mit den daran befestigten Verbindungselementen 17 komplett vorgefertigt sein.

In den ausgelieferten Verteilerschränken 1 und 2 sind die Öffnungen 4 und 6 durch nicht gezeigte Abdeckungen verschlossen. Diese Abdeckungen füllen die Einsenkungen 24 in der Seitenwand aus und schließen bündig mit dieser ab.

Zur Verbindung der Schränke 1 und 2 werden die Abdeckungen entfernt und der Isolierrahmen 7 am Schrank 1 befestigt. Hierzu wird die Nase 14 hinter dem oberen Rand der Öffnung 4 eingehängt und der Rahmen eingeklappt, bis die Rastnasen 15 am unteren Rand der Öffnung 4 einrasten. Der Rahmenansatz 12 schirmt nun den unisolierten Rand der Öffnung 3 ab.

Beim Einklappen des Isolierrahmens 7 wird der dem Verteilerschrank 1 zugewandte Teil des Gewindebolzens 18 in eine Öffnung 25 in der Blechwand 3 eingeführt. Auf diesen Teil des Gewindebolzens 18 kann nun eine Mutter 26 aufgeschraubt werden.

Zur Verbindung mit dem Verteilerschrank 2 wird der dem Verteilerschrank 1 abgewandte Teil des Gewindebolzens 18 in eine Öffnung 27 in der Blechwand 5 des Verteilerschranks 2 hineingeführt und auf diesen Teil des Gewindebolzens 18 eine Mutter 28 aufgeschraubt. Der in die Öffnung 6 hineinstehende Rahmenansatz 11 des Isolierrahmens 7 schirmt den unisolierten Rand der Öffnung 6 nun elektrisch ab.

Die mit einem isolierenden Überzug versehenen Muttern 26 und 28 sind innerhalb von Einsenkungen 29 und 30 angeordnet, welche in einer aus Kunststoff bestehenden Wandinnenverkleidung 31 bzw. 32 gebildet ist. Die Wandinnenverkleidungen weisen jeweils eine zu der Öffnung 3 bzw. 6 ausgerichtete Öffnung 33 bzw. 34 auf, die geringfügig enger als die durch den Rahmenansatz 12 bzw. 11 gebildete Öffnung ist.

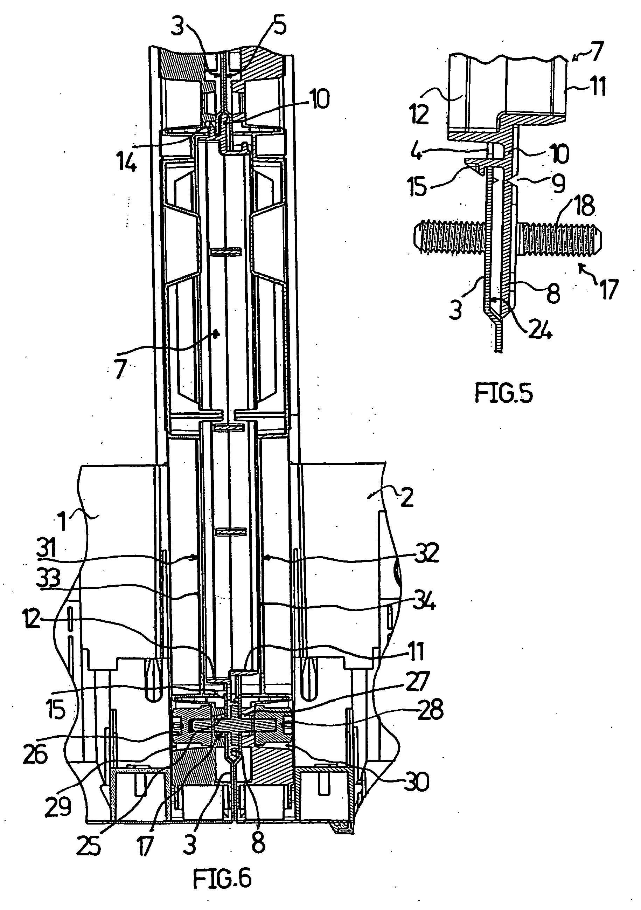

Wie Fig. 6 erkennen lässt, wird der durch die Einsenkungen 24 gebildete Hohlraum durch den umlaufenden Flansch 10 und den Ansatz 8 vollständig ausgefüllt. Die Muttern 26 und 28 liegen jeweils über die betreffende Innenwandverkleidung 31 bzw. 32 gegen die Wand 3 bzw. 5 an. Da der Ansatz 8 den Hohlraum zwischen den Blechwänden 3 und 5 ausfüllt, ist durch den Ansatz ein Gegenhalter gebildet, so dass die Muttern 26 und 28 festgezogen werden können.

In dem beschriebenen Ausführungsbeispiel kann die der Schrankrückwand nächstliegende Öffnung 16 aufgrund im Wege stehender Inneneinbauten nicht genutzt werden. Letztere Öffnung kommt zum Einsatz, wenn der Isolierrahmen 7 an der der Seitenwand 3 entgegengesetzten Seitenwand in eine entsprechende Öffnung eingesetzt wird.

Abweichend von dem beschriebenen Ausführungsbeispiel könnten Gewindebolzen aus Kunststoff als Verbindungsteile einstückig an den Ansatz 8 angeformt sein.

## Patentansprüche

1. System zur Kopplung zweier, einen Korpus aus Blech aufweisender Zähler- oder/und Verteilerschränke, mit einem Isolierrahmen (7), welcher in zueinander ausgerichtete Seitenwandöffnungen (4,6) der Schränke (1,2), die an den betreffenden Seitenwänden (3,5) aneinander gekoppelt sind, einsetzbar ist, um die Ränder der Seitenwandöffnungen (4,6) gegen einen durch die Seitenwandöffnungen (4,6) verlegbaren Leiter elektrisch zu isolieren,
**dadurch gekennzeichnet**,
das der Isolierrahmen (7) Einrichtungen zur Aneinanderkopplung der Schränke (1,2) aufweist, die einen nach außen vorstehenden, zur Anordnung zwischen den Seitenwänden (3,5) vorgesehenen Ansatz (8) mit wenigstens einer Durchführungsöffnung (16) für ein die Seitenwände (3,5) durchsetzendes Bolzenverbindungselement (17) oder mit wenigstens einem, einstückig an dem Ansatz (8) angeformten solchen Bolzen Verbindungselement (17) umfassen.

2. Kopplungssystem nach Anspruch 1,
**dadurch gekennzeichnet,**
**dass** der Ansatz (8) von dem übrigen Isolierrahmen (7) an einer Sollbruchstelle (9) trennbar ist.

3. Kopplungssystem nach Anspruch 1 oder 2,
**dadurch gekennzeichnet,**
**dass** der Ansatz (8), ggf. zusammen mit einem am Isolierrahmen (7) umlaufenden Flansch (10), einen Hohlraum ausfüllt, welcher zwischen den Seitenwänden (3,5) der gekoppelten Schränke (1,2) durch eine jeweils an die Öffnung (4,6) in den Seitenwänden (3,5) angrenzende Wandeinsenkung (24) gebildet ist.

4. Kopplungssystem nach einem der Ansprüche 1 bis 3,
**dadurch gekennzeichnet,**
**dass** eine den Isolierrahmen (7) und das daran befestigte Verbindungselement (17) umfassende Baueinheit vorgefertigt ist.

5. Kopplungssystem nach einem der Ansprüche 1 bis 4,
**dadurch gekennzeichnet,**
**dass** das Verbindungselement (17) einen Gewindebolzen (18) mit einem von dem Gewindebolzen (18) radial vorstehenden Mittelstück (19) umfasst.

6. Kopplungssystem nach Anspruch 5,
**dadurch gekennzeichnet,**
**dass** an dem Ansatz (8) ein das Mittelstück (19) drehfest aufnehmender Sitz (20) gebildet ist.

7. Kopplungssystem nach Anspruch 6,
**dadurch gekennzeichnet,**
**dass** das Mittelstück (19) in dem Sitz (20) verklemmbar ist.

8. Kopplungssystem nach Anspruch 6 oder 7,
**dadurch gekennzeichnet,**
**dass** der Sitz (20) einen das Mittelstück (19) umgebenden Rahmen (35) umfasst, von dem nach innen Nasen (22) vorstehen.

9. Kopplungssystem noch einem der Ansprüche 6 bis 8,
**dadurch gekennzeichnet,**
**dass** die Durchführungsöffnung (16) in einer Bodenwand (21) des Sitzes (20) gebildet ist.

10. Kopplungssystem nach Anspruch 9,
**dadurch gekennzeichnet,**
**dass** in der Durchführungsöffnung Nasen (22) radial nach innen vorstehen.

## Claims

1. System for coupling two meter or/and distributor cabinets which have a body which is composed of sheet metal, having an insulating frame (7) which can be inserted into side wall openings (4, 6), which are aligned with one another, in the cabinets (1, 2) which are coupled to one another at the respective side walls (3, 5), in order to electrically insulate the edges of the side wall openings (4, 6) from a conductor which can be laid through the side wall openings (4, 6), **characterized in that** the insulating frame (7) has devices for coupling the cabinets (1, 2) to one another, the said devices comprising an attachment piece (8) which projects outward and is intended to be arranged between the side walls (3, 5) and has at least one passage opening (16) for a bolt connection element (17) which passes through the side walls (3, 5) or has at least one bolt connection element (17) of this kind which is integrally formed on the attachment piece (8).

2. Coupling system according to Claim 1, **characterized in that** the attachment piece (8) can be separated from the rest of the insulating frame (7) at a predetermined breaking point (9).

3. Coupling system according to Claim 1 or 2, **characterized in that** the attachment piece (8), possibly together with a flange (10) which runs around the insulating frame (7), fills a cavity which is formed between the side walls (3, 5) of the coupled cabinets (1, 2) by a wall recess (24) which in each case adjoins the opening (4, 6) in the side walls (3, 5).

4. Coupling system according to one of Claims 1 to 3, **characterized in that** a unit which comprises the insulating frame (7) and the connection element (17) which is attached to the said insulating frame is prefabricated.

5. Coupling system according to one of Claims 1 to 4, **characterized in that** the connection element (17) comprises a threaded bolt (18) having a central piece (19) which projects radially from the threaded bolt (18).

6. Coupling system according to Claim 5, **characterized in that** a seat (20) which accommodates the central piece (19) in a rotationally fixed manner is formed on the attachment piece (8).

7. Coupling system according to Claim 6, **characterized in that** the central piece (19) can be clamped in the seat (20).

8. Coupling system according to Claim 6 or 7, **characterized in that** the seat (20) comprises a frame (35) which surrounds the central piece (19), lugs (22) projecting inward from the said frame.

9. Coupling system according to one of Claims 6 to 8, **characterized in that** the passage opening (16) is formed in a base wall (21) of the seat (20).

10. Coupling system according to Claim 9, **characterized in that** lugs (22) project radially inward in the passage opening.

## Revendications

1. Système pour le couplage de deux armoires de compteur et/ou de distribution qui comprennent un corps en tôle, comprenant un cadre isolant (7), lequel est susceptible d'être mis en place dans des ouvertures (4, 6) de parois latérales, tournées l'une vers l'autre, des armoires (1, 2), celles-ci étant couplées l'une à l'autre au niveau des parois latérales concernées (3, 5), afin d'isoler électriquement les bords des ouvertures (4, 6) de parois latérales vis-à-vis d'un conducteur à poser à travers les ouvertures (4, 6) de parois latérales,
**caractérisé en ce que**
le cadre isolant (7) comprend des moyens pour coupler les armoires (1, 2) l'une à l'autre, qui comprennent un talon (8) en dépassement vers l'extérieur, prévu pour être agencé entre les parois latérales (3, 5), avec au moins une ouverture de traversée (16) pour un élément de liaison de type boulon (17) qui traverse les parois latérales (3, 5) ou avec au moins un tel élément de liaison de type boulon conformé d'une seule pièce sur le talon (8).

2. Système de couplage selon la revendication 1,
**caractérisé en ce que** le talon (8) est séparable du reste du cadre isolant (7) au niveau d'un emplacement de rupture de consigne (9).

3. Système de couplage selon la revendication 1 ou 2,
**caractérisé en ce que** le talon (8), le cas échéant conjointement avec une bride (10) en périphérie sur le cadre isolant (7), remplit une cavité qui est formée entre les parois latérales (3, 5) des armoires couplées (1, 2) par un renfoncement de paroi (24) respectivement adjacent à l'ouverture (4, 6) dans les parois latérales (3, 5).

4. Système de couplage selon l'une des revendications 1 à 3,
**caractérisé en ce qu'**une unité structurelle comprenant le cadre isolant (7) et l'élément de liaison (17) fixé à celui-ci est préfabriquée.

5. Système de couplage selon l'une des revendications 1 à 4,
**caractérisé en ce que** l'élément de liaison (17) comprend un goujon fileté (18) avec une pièce médiane (19) qui dépasse radialement du goujon fileté (18).

6. Système de couplage selon la revendication 5,
**caractérisé en ce qu'**un siège (20) qui reçoit la pièce médiane (19) solidairement en rotation est formé sur le talon (8).

7. Système de couplage selon la revendication 6,
**caractérisé en ce que** la pièce médiane (19) est susceptible d'être coincée dans le siège (20).

8. Système de couplage selon la revendication 6 ou 7,
**caractérisé en ce que** le siège (20) comprend un cadre (35) qui entoure la pièce médiane (19) et duquel des ergots (22) dépassent vers l'intérieur.

9. Système de couplage selon l'une des revendications 6 à 8,
**caractérisé en ce que** l'ouverture de traversée (16) est formée dans une paroi de fond (21) du siège (20).

10. Système de couplage selon la revendication 9,
**caractérisé en ce que** des ergots (22) dépassent radialement vers l'intérieur dans l'ouverture de traversée.
